# DEMANDE DE BREVET EUROPEEN

(11) **EP 4 088 565 A1**
(43) Date de publication de la demande: **16.11.2022**
(21) Numéro de dépôt: 21173646.7
(22) Date de dépôt: 12.05.2021
(51) Int. Cl.: A01G 9/24

(54) **PROCÉDÉ DE CONTRÔLE DE L'ATMOSPHÈRE INTERNE À UNE SERRE EN TERME D'HUMIDITÉ ET DE TEMPÉRATURE**

(71) Demandeur: L'Air Liquide, société anonyme pour l'Étude et l'Exploitation des procédés Georges Claude, 75007 Paris (FR); Air Liquide España, S.A., 28046 Madrid (ES); Sociedade Portuguesa do ar Liquido "Arliquido", Lda, 1495-131 Alges (PT)
(72) Inventeur: ARAUJO, Oliveira, 1495-131 Miraflores Lisboa (PT); JIMENEZ, Joseluis, 41500 Alcala de Guadaira Sevilla (ES)
(74) Mandataire: Air Liquide

(57) **Abrégé**

Un procédé de gestion des conditions opératoires d'une serre visant notamment à permettre le contrôle :
- de la température régnant à l'intérieur de la serre ;
- de l'humidité relative de l'atmosphère régnant à l'intérieur de la serre ;
se caractérisant en ce que l'on utilise la chaleur latente de vaporisation du CO₂ liquide comme moyen pour refroidir l'atmosphère interne à la serre, et pour permettre de condenser l'humidité résiduelle dans cette atmosphère en l'amenant en deçà d'une limite basse, de la manière suivante :
- on dispose dans la serre d'un ou plusieurs échangeurs air/liquide cryogénique ;
- on procède à l'injection, durant tout ou partie de la durée de la journée, dans le ou certains des échangeurs, de CO₂ liquide, pour réaliser un échange thermique entre l'air interne à la serre et les parois froides du ou des échangeurs, et ainsi abaisser la température interne à la serre et condenser tout ou partie de l'humidité résiduelle de l'atmosphère interne sur les parois froides de du ou des échangeurs.

## Description

La présente invention concerne le domaine des procédés de contrôle des atmosphères internes à des serres de culture de végétaux, fruits, légumes, ou encore des fleurs.

On sait en effet que le contrôle de la température et de la teneur en gaz CO₂ de l'atmosphère de telles serres est un facteur très important pour le bon fonctionnement de tels espaces.
Si l'on considère dans ce qui suit le cas des plantes, la température a notamment un rôle majeur dans la croissance et le développement des plantes. Outre l'optimisation de la température, la concentration en CO₂ de l'atmosphère doit être maîtrisée car elle influence fortement la croissance des plantes qui consomment du CO₂ dans le cadre de la réaction de photosynthèse, le combinant à l'eau pour former des sucres et de l'oxygène. Un niveau de concentration en CO₂ trop faible limite la croissance de la plante, mais un niveau de CO₂ trop élevé n'entraine pas de bénéfices pour la plante.

On sait aussi que dans ces cultures en serres, l'humidité relative est un facteur clé. On sait en effet que certaines cultures sont très denses, dans un espace limité et fermé, et que par ailleurs les plantes elles même « transpirent » de l'humidité.
Et l'on observe alors en pratique une augmentation importante du taux d'humidité dans de telles serres et c'est un problème puisque dans ces conditions dégradées, la transpiration et la capacité de la plante à transporter ses nutriments et ses minéraux peut s'amoindrir, sans oublier le fait que ces atmosphères humides favorisent le développement des moisissures, qui passent souvent inaperçues, faisant pourrir les fruits et détruisant certaines espèces végétales, ou faisant démarrer certaines infections chez d'autres espèces encore, ce qui présente bien sûr de lourdes conséquence en terme de productivité et de coût d'utilisation des pesticides et fongicides.

Et néanmoins il faut considérer le fait qu'un taux d'humidité relative contrôlé durant certaines périodes de la croissance de certains végétaux peut être très bénéfique, préjudiciable pour d'autres.

Un des objectifs de la présente invention est alors de proposer un nouveau procédé de contrôle du taux d'humidité régnant dans de telles serres.

Comme on le verra plus en détails dans ce qui suit, la présente invention propose d'adopter l'approche technique suivante :
- utiliser la chaleur latente de vaporisation du CO₂ liquide comme moyen pour refroidir l'atmosphère interne à la serre (et donc limiter l'accroissement de la température dans la serre), et pour permettre de condenser l'humidité résiduelle dans cette atmosphère, et éliminer cette humidité du système.
- dans les serres fermées, utilisant un éclairage artificiel, utiliser la chaleur latente de vaporisation du CO₂ liquide comme moyen de contrôle de la température de la serre.

On sait notamment que dans le cas de serres situées dans des climats chauds, à partir d'une certaine heure il est commun d'ouvrir les fenêtres d'aération pour réduire la température interne ou la teneur en humidité.
Et l'on mesure alors clairement à quel point le fait d'utiliser la chaleur latente de vaporisation du CO₂ liquide peut permettre de retarder leur ouverture, ce qui réduit parallèlement les pertes de CO₂ de l'atmosphère interne à la serre vers l'extérieur.

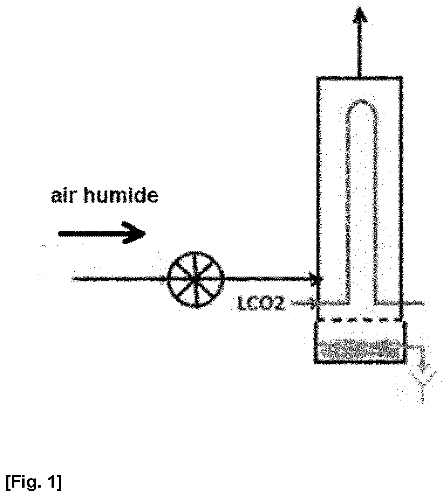

Et l'on peut notamment utiliser pour cela par exemple un échangeur air/CO₂ tel que celui illustré en figure 1 annexée, voire plusieurs de ces échangeurs répartis sur la surface de la serre.

La présente invention concerne alors un procédé de gestion des conditions opératoires d'une serre visant notamment à permettre le contrôle :
- de la température régnant à l'intérieur de la serre ;
- de la teneur en humidité de l'atmosphère régnant à l'intérieur de la serre ;
se caractérisant en ce que l'on utilise la chaleur latente de vaporisation du CO₂ liquide comme moyen pour refroidir l'atmosphère interne à la serre, et pour permettre de condenser l'humidité résiduelle dans cette atmosphère en l'amenant en deçà d'une limite basse, de la manière suivante :
- on dispose dans la serre d'un ou plusieurs échangeurs air/liquide cryogénique ;
- on procède à l'injection, durant tout ou partie de la durée de la journée, dans le ou certains des échangeurs, de CO₂ liquide, pour réaliser un échange thermique entre l'air interne à la serre et les parois froides du ou des échangeurs, et ainsi abaisser la température interne à la serre et condenser tout ou partie de l'humidité résiduelle de l'atmosphère interne sur les parois froides du ou des échangeurs.

Illustrons dans ce qui suit un exemple de mise en œuvre de l'invention, qui permettra de bien comprendre tous les avantages techniques que permet l'invention.

Cet exemple a été mis en œuvre dans les conditions opératoires suivantes :
- une serre dite "multi-tunnel"
- superficie de la serre : 8340 m²
- superficie occupée par les plantes: 75%
- type de plantation: courgettes
- température initiale à l'intérieur de la serre : 28°C
- humidité relative moyenne au départ : 80%
- densité de l'air à 28°C et 80% d'humidité relative : 1,1462 kg/m3
- durée de la campagne : 11 mois
- durée d'injection journalière du CO₂ : 7 heures
L'objectif à atteindre est le suivant :
- Humidité relative moyenne: 65%
- Température dans la serre: 28°C

Ce qui amène à traiter 680 m³/h air pour éliminer 12,3 kg H₂O/h par condensation.
Le besoin en CO₂ liquide pour assurer cette condensation est de 100 kg/h.
Pour cet exemple, deux échangeurs de chaleur ont été installés à l'intérieur de la serre. Pour garantir le bon mélange de l'air de la serre avec l'air déshumidifié provenant des échangeurs un ventilateur a été utilisé.

Pour réguler les conditions de température et d'humidité relative à l'intérieur de la serre, un automate programmable reçoit les mesures en provenance d'une série de sondes de température et d'humidité relative, et permet le pilotage d'une vanne tout ou rien, installée après les échangeurs de chaleur, en fonction de la température intérieure et de l'humidité relative de l'atmosphère de la serre, pour ainsi adapter l'arrivée de CO₂ liquide dans la serre.
Á la mise en marche du système, un ventilateur se met en marche pour éviter la stratification de l'atmosphère.

## Revendications

1. Procédé de gestion des conditions opératoires d'une serre visant notamment à permettre le contrôle :
- de la température régnant à l'intérieur de la serre ;
- de l'humidité relative de l'atmosphère régnant à l'intérieur de la serre ;
**se caractérisant en ce que** l'on utilise la chaleur latente de vaporisation du CO₂ liquide comme moyen pour refroidir l'atmosphère interne à la serre, et pour permettre de condenser l'humidité résiduelle dans cette atmosphère en l'amenant en deçà d'une limite basse, de la manière suivante :
- on dispose dans la serre d'un ou plusieurs échangeurs air/liquide cryogénique ;
- on procède à l'injection, durant tout ou partie de la durée de la journée, dans le ou certains des échangeurs, de CO₂ liquide, pour réaliser un échange thermique entre l'air interne à la serre et les parois froides du ou des échangeurs, et ainsi abaisser la température interne à la serre et condenser tout ou partie de l'humidité résiduelle de l'atmosphère interne sur les parois froides du ou des échangeurs.
